# EUROPEAN PATENT APPLICATION

(11) **EP 4 467 225 A1**
(43) Date of publication of application: **27.11.2024**
(21) Application number: 22922299.7
(22) Date of filing: 17.06.2022
(51) Int. Cl.: B01D 53/14, B04C 5/24, B04C 9/00, B01D 53/78, B01D 53/79, B01D 46/00, C02F 1/66

(54) **SYSTEM FOR CAPTURING CARBON DIOXIDE AND RECYCLING CARBON FOR USE IN CEMENT MANUFACTURING FACILITIES**

(30) Priority: 21.01.2022 KR 20220009507
(71) Applicant: Lowcarbon Co., Ltd., Seongjeon-myeon, Gangjin-gun Jeollanam-do 59205 (KR)
(72) Inventor: LEE, Cheol, Cheongju-si Chungcheongbuk-do 28709 (KR)
(74) Representative: M. Zardi & Co S.A.
(86) International application number: PCT/KR2022/008634
(87) International publication number: WO 2023/140440

(57) **Abstract**

Proposed is a system for capturing carbon dioxide and recycling carbon for use in cement manufacturing facilities. The system includes a preheater provided with multiple stages of cyclones arranged in series in a vertical direction and configured to receive and preheat a cement raw material, a calciner configured to calcine the preheated cement raw material, a kiln configured to burn the calcined cement raw material, an exhaust line connected to the cyclones of the preheater and configured to discharge an exhaust gas respectively discharged from the calciner and the kiln to an outside, and a reactor disposed on the exhaust line, configured to receive the exhaust gas and to capture carbon dioxide in the exhaust gas by reacting the exhaust gas with a basic alkaline mixture solution, to collect a reactant containing the captured carbon dioxide, and to separate a carbon dioxide reactant and a waste solution from the reactant.

## Description

### Technical Field

The present disclosure relates to a system for capturing carbon dioxide and recycling carbon for use in cement manufacturing facilities. More particularly, the present disclosure relates to a system for capturing carbon dioxide and recycling carbon for use in cement manufacturing facilities, the system being configured to capture and convert carbon dioxide in an exhaust gas into a carbon resource by using a basic alkaline mixture solution, thereby being capable of removing carbon dioxide in cement manufacturing facilities and also capable of recycling carbon dioxide such that carbon dioxide is converted into other useful materials.

### Background Art

Recently, industry has proposed a plan to reduce greenhouse gas emissions according to a global carbon neutrality trend. Particularly, the cement industry, in which greenhouse gas emissions are high, is one of the fields that is attracting attention in the effort to achieve to carbon neutrality.

Particularly, according to the 2017 report of the International Energy Agency (IEA), global cement production is expected to increase to more than 5 billion tons per year over the next 30 years. Due to economic development and rapid urbanization of underdeveloped countries, the demand for new buildings will increase, and the demand for concrete and cement will inevitably increase.

At least 4 billion tons per year of the cement required for manufacturing concrete used in most buildings is per year on a global basis. In the manufacturing process of the cement, a limestone raw material goes through a heating process. At this time, a large amount of carbon dioxide (CO₂) that is a representative greenhouse gas is emitted.

Specifically, in the conventional cement manufacturing facility, limestone (CaCO₃) that is a main raw material of a cement raw material is preheated by a preheater, the limestone is calcined by a calciner and a cyclone at a lowermost stage of the preheater, and then the limestone is burned by a rotary kiln that is a kiln at a high temperature atmosphere of about 1450 degrees Celsius, so that a cement clinker is manufactured.

Due to the calcining, a chemical reaction represented as limestone (CaCO₃) → CaO + CO₂↑, in which the limestone is the cement raw material, occurs, and a high concentration of CO₂ gas is generated. In addition, fossil fuel is burned in a main burner in order to maintain the rotary kiln that is the kiln under a high temperature atmosphere, so that a high concentration of CO₂ gas is also generated by combustion of the fossil fuel. Here, in the exhaust gas from the main burner, the combustion air contains a lot of N₂ gas, so that the concentration of CO₂ gas is low.

As described above, in an exhaust gas discharged from a cement kiln, a high concentration of CO₂ gas and a low concentration of CO₂ gas are mixed, and a large amount of CO₂ gas is discharged from the cement kiln, so that there is an urgent need for a plan for efficiently reducing CO₂ gas. Accordingly, the development of carbon dioxide capture technology is actively being performed.

Meanwhile, in a conventional carbon dioxide capture technology, a process in which carbon dioxide (CO₂) contained in a combustion exhaust gas is cooled in a cooling tower, CO₂ is absorbed in an alkanolamine aqueous solution such as monoethanolamine and so on in an absorption tower and the remaining combustion exhaust gas is emitted into the atmosphere, the alkanolamine aqueous solution in which CO₂ is absorbed is supplied to a recycling tower and is recycled by heating the alkanolamine aqueous solution in a reboiler, the alkanolamine aqueous solution is returned to the absorption tower, and then CO₂ is desorbed and recovered is known. However, since alkanolamine has a high CO₂ absorption reaction heat and has a high decomposition heat in the recycling process, there is a problem that alkanolamine has a high energy consumption and therefore has a low economic feasibility.

Therefore, there is an urgent need for a plan capable of securing the economic feasibility compared to that of the conventional technology and capable of efficiently capturing carbon dioxide emitted from a cement manufacturing facility.

In addition, as a carbon dioxide capture technology has recently been developed, carbon dioxide capture products have been generated, but technology for utilizing or storing generated carbon dioxide capture products has not yet been developed, so that technology development is required.

Meanwhile, in a conventional carbon dioxide storing apparatus developed so as to store a CO₂ capture product, it is common to store CO₂ in a liquid state due to an economic problem of storing CO₂. To this end, a pressure tank that maintains CO₂ in a high-pressure and low-temperature state is required, so that the manufacturing cost is increased and there is a problem that the operation cost for operating the pressure tank in the high-pressure and low-temperature state is increased.

### Disclosure

### Technical Problem

Accordingly, the present disclosure has been made keeping in mind the above problems occurring in the related art, and an objective of the present disclosure is to provide a system for reducing carbon dioxide in an exhaust gas generated during a cement manufacturing process.

In addition, another objective of the present disclosure is to provide a system for capturing carbon dioxide and recycling carbon for use in cement manufacturing facilities, the system being configured to use a basic alkaline mixture solution such that carbon dioxide in an exhaust gas is captured and converted into a carbon resource so that carbon dioxide is removed and also carbon dioxide is recycled into other useful materials.

In addition, still another objective of the present disclosure is to provide a system for capturing carbon dioxide and recycling carbon for use in cement manufacturing facilities, the system being configured to capture carbon dioxide by using a basic alkaline mixture solution that solves a disadvantage of an alkanolamine aqueous solution which is a carbon dioxide absorber and which is widely used in a conventional technology, thereby being capable of securing economic feasibility compared to that of the conventional technology.

In addition, yet another objective of the present disclosure is to provide a system for capturing carbon dioxide and recycling carbon for use in cement manufacturing facilities, the system being configured such that carbon dioxide in an exhaust gas generated during a cement manufacturing process is captured and converted into a carbon resource and then the converted carbon resource is stored in an underground reservoir and is used, thereby being capable of more stably and efficiently storing the carbon resource, which is a carbon dioxide capture reactant, than a conventional carbon dioxide storing apparatus, being capable of reducing the manufacturing cost and the operation cost, and being capable of allowing the stored carbon resource to be used later when the carbon resource is required.

The technical problems to be solved by the present disclosure are not limited to the above-mentioned problems, and other problems which are not mentioned will be clearly understood by those skilled in the art from the following description.

### Technical Solution

In order to achieve the above objectives, according to an embodiment of the present disclosure, there is provided a system for capturing carbon dioxide and recycling carbon for use in cement manufacturing facilities, the system including: a preheater provided with multiple stages of cyclones arranged in series in a vertical direction and configured to receive and preheat a cement raw material; a calciner configured to calcine the cement raw material preheated by the preheater; a kiln configured to burn the cement raw material calcined in the calciner; an exhaust line connected to the cyclones of the preheater and configured to discharge an exhaust gas respectively discharged from the calciner and the kiln to an outside; and a reactor disposed on the exhaust line, configured to receive the exhaust gas and to capture carbon dioxide in the exhaust gas by reacting the exhaust gas with a basic alkaline mixture solution, to collect a reactant containing the captured carbon dioxide, and to separate a carbon dioxide reactant and a waste solution from the reactant.

In addition, the reactor may include: a mixer configured to supply the basic alkaline mixture solution; an absorption tower configured to capture carbon dioxide in the exhaust gas by reacting the basic alkaline mixture solution supplied from the mixer with the exhaust gas in which micro bubbles are formed by passing through a bubbler formed on a lower portion of the absorption tower; a separator configured to collect the reactant containing carbon dioxide captured in the absorption tower and to separate the carbon dioxide reactant and the waste solution from the reactant; and a carbon resource storage unit storing the separated carbon dioxide reactant for recycling the carbon dioxide reactant.

In addition, the mixer may be configured to generate the basic alkaline mixture solution by mixing a basic alkaline solution supplied from a basic alkaline solution storage with water supplied from a water supply source.

In addition, the basic alkaline solution and the water may be mixed in a ratio of 1:1 to 1:5.

In addition, an average pH of the basic alkaline mixture solution may be pH 12 to pH 13.5.

In addition, the basic alkaline mixture solution may include: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

In addition, the basic alkaline mixture solution may be input by being adjusted through a valve in the mixer when a level of the basic alkaline mixture solution in the absorption tower is lowered to less than 90%, and inputting of the basic alkaline mixture solution may be stopped and, at the same time, the basic alkaline solution and water may be mixed until a pH of the basic alkaline mixture solution becomes pH 12 to pH 13.5 when the level of the basic alkaline mixture solution becomes 100%.

In addition, the bubbler may be configured to form exhaust gas micro bubbles by using the exhaust gas.

In addition, the absorption tower may include a body formed in a cylindrical shape, a motor, a rotary shaft rotated by the motor, and a rotation wing operatively connected to the rotary shaft, the rotary shaft and the rotation wing may be positioned inside the body, a plurality of nozzles capable of spraying the basic alkaline mixture solution in a form of bubbles may be formed on the rotation wing in a longitudinal direction by being spaced apart from each other at a predetermined distance, and the basic alkaline mixture solution supplied from the mixer may be introduced into the rotary shaft, and the basic alkaline mixture solution that is introduced may be sprayed inside the body having the cylindrical shape through the plurality of nozzles.

In addition, the absorption tower may further include a baffle having a plurality of slits or holes such that the exhaust gas is introduced with a uniform speed distribution.

In addition, the cyclones may be formed such that the cyclone which is positioned at an uppermost stage and to which the cement raw material is supplied and the cyclone which is positioned at a lowermost stage and to which the exhaust gas respectively discharged from the calciner and the kiln are arranged at two stages in series in the vertical direction.

In addition, the carbon dioxide reactant may include sodium carbonate (Na₂CO₃) or sodium bicarbonate (NaHCO₃).

In addition, the separator may include: a centrifuge configured to separate the waste solution and the carbon dioxide reactant containing sodium carbonate (Na₂CO₃) or sodium bicarbonate (NaHCO₃) from the reactant; and a vibration separation membrane formed corresponding to an inner circumference of a discharge pipe for discharging only sodium bicarbonate in the carbon dioxide reactant, the vibration separation membrane having a surface provided with fine holes formed in a size capable of allowing carbon bicarbonate to pass therethrough.

In addition, the reactor may further include: a monitoring part configured to monitor a level and a pH of the basic alkaline mixture solution in the absorption tower; and a control part configured to adjust a supply amount of the basic alkaline mixture solution by the monitoring part.

In addition, the carbon resource storage unit may include: an underground reservoir accommodating the carbon dioxide reactant; an inlet unit configured to load the carbon dioxide reactant to the underground reservoir; a discharge unit connected to the underground reservoir and configured to unload the carbon dioxide reactant in the underground reservoir; a control unit configured to control the inlet unit and the discharge unit during loading/unloading of the carbon dioxide reactant accommodated in the underground reservoir; and a filter configured to filter out impurities other than the carbon dioxide reactant during the loading/unloading of the carbon dioxide reactant.

In addition, the carbon dioxide reactant may include bicarbonate in a liquid state or a gel state.

In addition, the inlet unit may include: an inlet valve configured to open and close a flow path for the carbon dioxide reactant that is loaded inside the underground reservoir, thereby adjusting a flow rate of the carbon dioxide reactant that is loaded; and an inlet line connected to the underground reservoir so as to load the carbon dioxide reactant.

In addition, the discharge unit may include: a discharge line connected to the underground reservoir and configured to unload the carbon dioxide reactant to an outside of the underground reservoir; a discharge pump provided on the discharge line and configured to forcibly unload the carbon dioxide reactant accommodated in the underground reservoir to the outside; a discharge valve configured to open and close a flow path toward the discharge pump for the carbon dioxide reactant accommodated in the underground reservoir; and a vacuum pump connected to the discharge line between the underground reservoir and the discharge valve and configured to discharge air in the underground reservoir to the outside and to form a vacuum state.

In addition, the filter may include pores having a diameter of 10 µm to 20 µm formed in a size that allows penetration of the carbon dioxide reactant, and may filter out impurities other than the carbon dioxide reactant during the loading/unloading of the carbon dioxide reactant.

### Advantageous Effects

According to embodiments of the present disclosure, the following effects may be realized. However, the embodiments may not include all these effects, and a claim scope of the present disclosure is not construed as being limited thereto.

According to an embodiment of the present disclosure, carbon dioxide may be reduced by capturing carbon dioxide in the exhaust gas discharged during the cement manufacturing process, and sodium carbonate or sodium bicarbonate, which are useful resources, may be manufactured by using the captured carbon dioxide.

In addition, according to an embodiment of the present disclosure, carbon dioxide is captured by using the basic alkaline mixture solution that solves a disadvantage of an alkanolamine aqueous solution that is a carbon dioxide absorber widely used in a conventional technology, and the captured carbon dioxide reactant may be utilized in various industrial fields such as food additives, detergents, soap raw materials, high-tech medical industries, wastewater treatment, and so on, so that profit generation is capable of being realized and economic feasibility compared to that of the conventional technology is capable of being secured.

In addition, according to an embodiment of the present disclosure, a carbon resource that is a carbon dioxide capture reactant is capable of being stably and efficiently stored in a space larger than a conventional carbon dioxide storing apparatus and, at the same time, the manufacturing cost and the operation cost are capable of being reduced and also the stored carbon resource is capable of being used later when the stored carbon resource is required.

### Description of Drawings

FIG. 1 is a view schematically illustrating a system for capturing carbon dioxide and recycling carbon for use in cement manufacturing facilities according to an embodiment of the present disclosure.
FIG. 2 is a view illustrating a reactor according to an embodiment of the present disclosure.
FIG. 3 is a view schematically illustrating a configuration of an absorption tower for improving a carbon dioxide capture performance of the reactor according to an embodiment of the present disclosure.
FIG. 4 is a cross-sectional view illustrating a carbon resource storage unit according to an embodiment of the present disclosure.
FIG. 5 is a view illustrating an underground temperature distribution according to a depth from a general ground surface.

### Mode for Invention

Since the present disclosure may be variously modified and have several exemplary embodiments, specific exemplary embodiments will be shown in the accompanying drawings and be described in detail in a detailed description.

However, it should be understood that the specific embodiments according to the concept of the present disclosure are not limited to the embodiments which will be described hereinbelow with reference to the accompanying drawings, but all of modifications, equivalents, and substitutions are included in the scope and spirit of the present disclosure.

It is to be understood that terms such as "including", "having", and so on are intended to indicate the existence of the features, numbers, steps, actions, elements, components, or combinations thereof disclosed in the specification, and are not intended to preclude the possibility that one or more other features, numbers, steps, actions, elements, components, or combinations thereof may exist or may be added.

The present disclosure relates to a system for capturing carbon dioxide and recycling carbon for use in cement manufacturing facilities, the system being configured to reduce carbon dioxide in an exhaust gas generated during a cement manufacturing process.

The system for capturing carbon dioxide and recycling carbon for use in the cement manufacturing facilities according to an embodiment of the present disclosure will be described in more detail with reference to the following drawings.

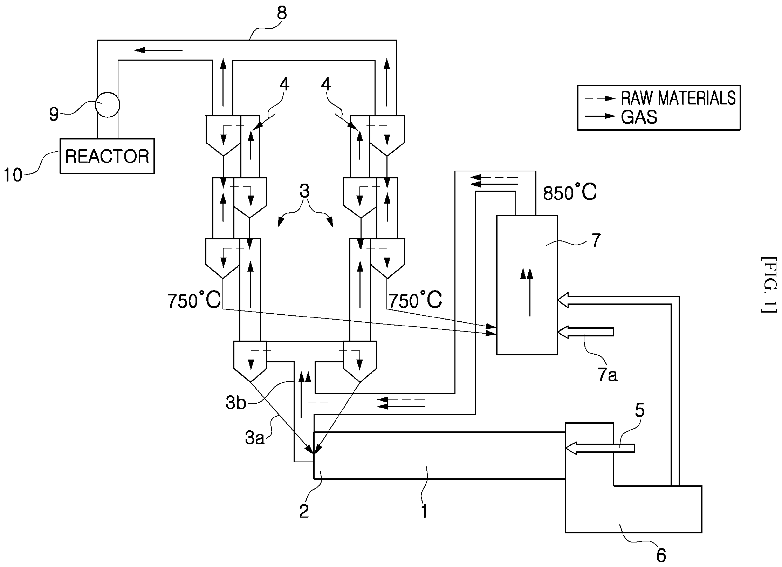

Referring to FIG. 1, in a brief description of the system for capturing carbon dioxide and recycling carbon for use in the cement manufacturing facilities according to an embodiment of the present disclosure, limestone (CaCO₃) that is included as a main raw material of a cement raw material is preheated by a preheater 3, the limestone (CaCO₃) is subsequently calcined by a calciner 7 and a cyclone at a lowermost stage of the preheater 3, the limestone (CaCO₃) is burned under a high temperature atmosphere of about 1450 degrees Celsius in a kiln 1 so that a cement clinker is manufactured, and then carbon dioxide generated during the process of manufacturing the cement clinker is introduced into a reactor 10 through an exhaust line 8, so that carbon dioxide is capable of being captured.

In addition, the system for capturing carbon dioxide and recycling carbon for use in the cement manufacturing facilities is a system capable of securing economic feasibility compared to a conventional technology since the system is capable of capturing carbon dioxide in an exhaust gas generated during a cement manufacturing process, capable of generating a carbon dioxide reactant containing sodium carbonate (Na₂CO₃) or sodium bicarbonate (NaHCO₃), which are useful materials, by using the captured carbon dioxide, and capable of storing the generated carbon dioxide reactant in an underground reservoir with little temperature change.

To this end, the system for capturing carbon dioxide and recycling carbon for use in the cement manufacturing facilities may include the preheater 3, the calciner 7, the kiln 1, the exhaust line 8, and the reactor 10. Optionally, a main burner 5 for heating an inner portion of the kiln 1 and a clinker cooler 6 for cooling the cement clinker after burning may be mounted on a right front side of the kiln 1.

The preheater 3 serves to preheat the cement raw material, and two sets of the preheater 3 are mounted in parallel on a left rear end portion 2 of a rotary kiln that is the kiln 1. Each preheater 3 comprises a multiple stages of cyclones arranged in series in a vertical direction. Specifically, the multiple stages of cyclones are formed such that a cyclone which is positioned at an uppermost stage and to which the cement raw material is supplied and a cyclone which is positioned at the lowermost stage and to which the exhaust gas respectively discharged from the calciner and the kiln are arranged at two stages in series in the vertical direction.

After the cement raw material is supplied by the cyclone at the uppermost stage of a supply line 4, the cement raw material sequentially falls toward the cyclone at the lowermost stage, so that the cement raw material is capable of being preheated by a high temperature exhaust gas that moves upward from the kiln 1.

The calciner 7 serves to calcine the cement raw material preheated by the preheater 3. After the cement raw material preheated by the preheater 3 is withdrawn from the cyclone at the second state from downward and then is supplied to the calciner 7, the cement raw material is burned by being heated by a burner 7a, and then the cement raw material is introduced into an inlet end portion 2 of the kiln 1 through a transport pipe 3a from the cyclone at the lowermost stage. Here, in the process in which the calciner 7 calcines the preheated cement raw material, a chemical reaction represented as limestone (CaCO₃) → CaO + CO₂↑ occurs, and carbon dioxide is generated.

The kiln 1 serves to burn the cement raw material calcined at the calciner 7. Specifically, the cement raw material calcined at the calciner 7 is transported to the kiln 1 through the transport pipe 3a from the cyclone at the lowermost stage disposed at the preheater 3, and the kiln 1 burns the cement raw material calcined at the calciner 7 at a high temperature of about 1450 degrees Celsius by a combustion exhaust gas from the main burner 5 so that the cement clinker that is a half-finished product is generated. Here, as fossil fuel is burned in the main burner 5 in order for the kiln 1 to burn the calcined cement raw material and to maintain a high temperature atmosphere, the exhaust gas containing carbon dioxide may be generated.

Meanwhile, in the inlet end portion 2 of the kiln 1, an exhaust gas pipe 3b supplying the exhaust gas discharged from the kiln 1 to the cyclone at the lowermost stage is mounted. Furthermore, the exhaust gas supplied to the cyclone is sequentially supplied to the cyclone at the upper side and preheats the cement raw material and, at the same time, the exhaust gas is finally discharged toward the reactor 10 through the exhaust line 8 by an exhaust fan 9 from an upper portion of the cyclone at the uppermost stage.

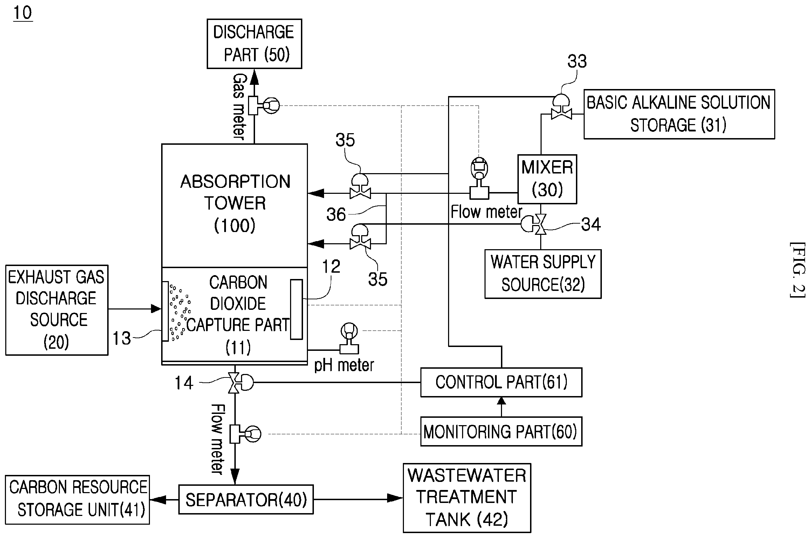

As a result, the reactor 10 is disposed on the exhaust line 8, and the reactor 10 may receive the exhaust gas containing carbon dioxide generated in the calciner 7 and carbon dioxide generated in the kiln 1 through the exhaust line 8. Furthermore, the reactor 10 may capture carbon dioxide in the exhaust gas by reacting the basic alkaline mixture solution with the supplied exhaust gas containing carbon dioxide, may collect a reactant containing the captured carbon dioxide, and may separate a carbon dioxide reactant and a waste solution from the reactant. Hereinafter, the reactor 10 will be described in detail with reference to FIG. 2.

FIG. 2 is a view illustrating the reactor according to an embodiment of the present disclosure.

Referring to FIG. 2, the reactor 10 according to an embodiment of the present disclosure may have a structure capable of reducing carbon dioxide by capturing carbon dioxide in an exhaust gas discharged from cement manufacturing facilities and capable of performing carbon utilization by using the captured carbon dioxide such that the captured carbon dioxide is converted into sodium carbonate or sodium bicarbonate.

Specifically, the reactor 10 according to an embodiment of the present disclosure is a reactor configured to capture carbon dioxide in an exhaust gas discharged from the calciner 7 and the kiln 1 in the cement manufacturing facilities by using a basic alkaline solution. Furthermore, the reactor 100 includes an absorption tower 100, a carbon dioxide capture part 11, an exhaust gas discharge source 20, a mixer 30, a separator 40, a carbon resource storage unit 41, and a discharge part 50.

The absorption tower 100 may refer to a facility, a building, an equipment, and so on capturing carbon dioxide. In addition, the carbon dioxide capture part 11 positioned on a lower end of the absorption tower 100 is a portion of the absorption tower 100, and may refer to a portion that captures carbon dioxide by bubbling the exhaust gas.

The absorption tower 100 includes the carbon dioxide capture part 11 at the lower end of the absorption tower 100, and is configured to capture only carbon dioxide in the exhaust gas by reacting the basic alkaline mixture solution with the exhaust gas (micro bubbles of the exhaust gas) discharged from the cement manufacturing facilities. After carbon dioxide in the exhaust gas is captured, the exhaust gas from which carbon dioxide is removed may remain in a gaseous state in the absorption tower 100.

A nozzle is mounted on an upper portion of the absorption tower 100, the basic alkaline mixture solution is sprayed inside the absorption tower 100 through the nozzle, and the basic alkaline mixture solution is collected in the carbon dioxide capture part 11 positioned at the lower end of the absorption tower 100. At the same time as the basic alkaline mixture solution is sprayed, the exhaust gas supplied from the exhaust gas discharge source 20 passes through a bubbler 13 in the carbon dioxide capture part 11 at the lower portion of the absorption tower 100, the exhaust gas in which micro bubbles are formed is supplied, and the basic alkaline mixture solution and the micro bubbles of the exhaust gas react with each other within the carbon dioxide capture part 11, so that carbon dioxide is captured. When the exhaust gas reacts with the basic alkaline mixture solution, the micro bubbles are formed while the exhaust gas passes through the bubbler 13 having fine holes formed on an outlet of the exhaust gas discharge source 20.

As the exhaust gas supplied from the exhaust gas discharge source 20 passes through the bubbler 13, the bubbler 113 may form the micro bubbles in the exhaust gas. Furthermore, the smaller the size of the micro bubbles, the larger the reaction area of the exhaust gas and the alkaline solution, so that the carbon dioxide capture ability may be increased. For example, the micro bubbles may refer to bubbles which have a size about equal to or less than 50 µm and which exist in an aqueous solution.

In addition, the absorption tower 100 may include a level indicator 12 inside the absorption tower 100, so that a level of a solution in the absorption tower 100 is capable of being detected.

The nozzle may include a plurality of nozzles, and may be formed of at least one stage. The nozzle is connected to the mixer 30, and may supply the basic alkaline mixture solution from the mixer 30.

The absorption tower 100 may be configured in series, in parallel, or in a series and parallel complex arrangement. For example, the absorption tower 100 may be arranged in series when the flow velocity of the exhaust gas is high. When unreacted CO₂ is discharged from the absorption tower due to a high flow velocity, the absorption tower may be mounted in series so as to capture unreacted CO₂.

In addition, for example, the absorption tower 100 may be arranged in parallel when the flow rate of the exhaust gas is large. When the flow rate of the exhaust gas exceeds the amount that the absorption tower can capture, the amount of carbon dioxide that can be captured may be increased by arranging the absorption tower in parallel.

The exhaust gas discharge source 20 may utilize carbon dioxide that is an exhaust gas introduced through the exhaust line 8 from the calciner 7 and the kiln 1. For example, the exhaust gas discharge source 20 may be positioned at the rear end of the cement manufacturing facility.

The mixer 30 mixes a basic alkaline solution supplied from a basic alkaline solution storage 31 with water supplied from a water supply source 32, and supplies the mixture to the nozzle of the absorption tower 100.

The basic alkaline mixture solution in which the basic alkaline solution and the water are mixed with each other may be supplied by using a separately connected bypass line 36 when a supply amount or a required amount of the basic alkaline mixture solution is increased.

The basic alkaline solution and the water may be mixed in a ratio of 1:1 to 1:5. For example, the basic alkaline solution and the water may be mixed in a ratio of 1:1 to 1:4, 1:1 to 1:3, 1:1 to 1:2, 1:2 to 1:5, 1:2 to 1:3, or 1:3 to 1:5.

A carbon dioxide capture rate may be increased as the basic alkaline mixture solution mixing ratio of the basic alkaline solution and the water is increased, but the mixing ratio of the water may be adjusted in consideration of the cost aspect.

The basic alkaline mixture solution includes: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

The water supply source 32 may include all water that may be easily acquired at a system installation site and may be, for example, seawater.

An average pH of the basic alkaline mixture solution may be at least pH 12. For example, the pH may be pH 12 to pH 13.5, pH 12, pH 12.1, pH 12.2, or pH 12.3. The pH of the basic alkaline mixture solution may be measured by a pH meter in the absorption tower 100, and carbon dioxide cannot be captured anymore when the pH of the basic alkaline mixture solution in the absorption tower 100 is less than pH 10.5. Therefore, in order to adjust the pH of the basic alkaline mixture solution, the amount of the basic alkaline solution and the amount of water may be adjusted from zero to 100% by each valve 33 and 34 and the basic alkaline solution and the water may be supplied to the mixer 30.

When the level of the basic alkaline mixture solution in the absorption tower 100 is lower than 90% (measured by the level indicator), the input may be adjusted through a valve 35 at the mixer 30 so that the basic alkaline mixture solution is input. Furthermore, when the level of the solution reaches 100%, the input of the solution may be stopped. At the same time, the basic alkaline solution and the water may be mixed until the pH of the basic alkaline mixture solution becomes pH 12 to pH 13.5.

Since the amount of basic alkaline mixture solution supplied to the absorption tower 100 and the amount of the solution discharged from the separator 40 are the same, the carbon dioxide capturing system is capable of being continuously maintained. Therefore, the valve (including a bypass valve if necessary) 35 is adjusted so that the same amount of the basic alkaline mixture solution as a value of a flow meter mounted in the line from the absorption tower 100 to the separator 40 is supplied to the absorption tower 100, thereby making the net flow to zero.

The reactant containing carbon dioxide captured by reacting the basic alkaline mixture solution and the exhaust gas introduced from the calciner 7 and the kiln 1 of the cement manufacturing facilities with each other is collected in the carbon dioxide capture part 11 of the absorption tower 100, the carbon dioxide reactant and the waste solution from the reactant are moved to the separator 40 through a valve 14, and the carbon dioxide reactant and the waste solution are separated from the reactant.

The separator 40 may include a centrifuge configured to separate the waste solution and the carbon dioxide reactant containing sodium carbonate (Na₂CO₃) or sodium bicarbonate (NaHCO₃) from the reactant, and may include a vibration separation membrane formed corresponding to a size of an inner circumference of a discharge pipe for discharging only sodium bicarbonate in the carbon dioxide reactant separated from the centrifuge, the vibration separation membrane having a surface provided with fine holes such that carbon bicarbonate is capable of passing therethrough. Through this, a high purity sodium bicarbonate can be acquired and can be sold immediately, so that a profit may be realized.

The size of the fine holes formed in the vibration separation membrane may be 10 µm to 20 µm, and the vibration separation membrane may further include a vibration generation part so as to induce vibration in the vibration separation membrane. The vibration generation part may be disposed so as to prevent the fine holes from being blocked by sodium bicarbonate.

The separated carbon dioxide reactant may be moved to the carbon resource storage unit 41, and may be recycled so as to be utilized for other purposes. For example, the carbon dioxide reactant may include sodium carbonate (Na₂CO₃) or sodium bicarbonate (NaHCO₃).

As described in Formula 1 below, the carbon dioxide reactant may be formed by reacting the basic alkaline mixture solution with carbon dioxide.

<Formula 1> 2NaOH + CO₂ → Na₂CO₃ + H₂O Na₂CO₃ + H₂O + CO₂ → 2NaHCO₃

In the reactant, the waste solution other than the carbon dioxide reactant is moved to a wastewater treatment tank 42 and then is discarded. For example, the waste solution may include illite minerals, water, and so on that are contained in the basic alkaline mixture solution that has finished a catalyst function.

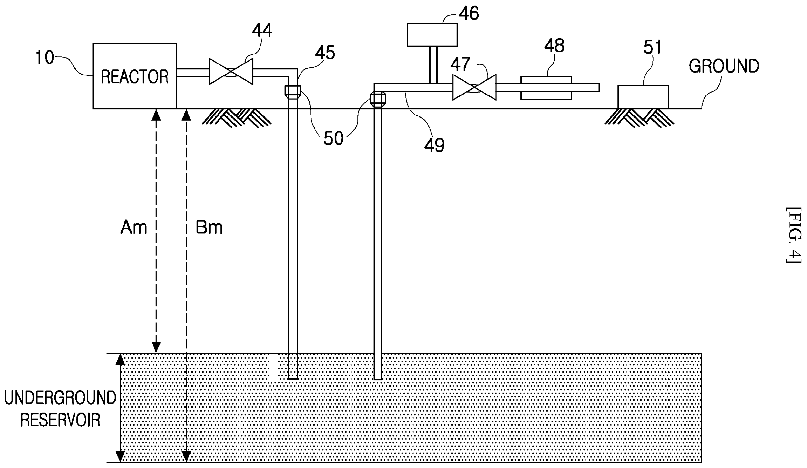

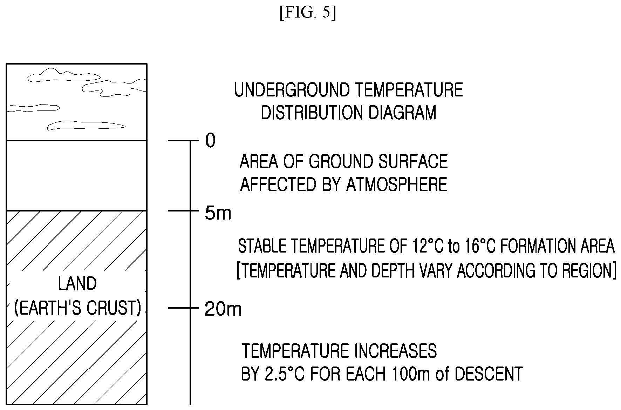

The carbon resource storage unit 41 is a carbon dioxide reactant storage unit in which an underground environment is considered, is capable of stably and efficiently storing a carbon resource that is a carbon dioxide capture reactant in a space larger than a conventional carbon dioxide storage apparatus and, at the same time, is capable of reducing the manufacturing cost, and may be implemented such that the stored carbon resource is capable of being utilized later when the stored carbon resource is required. Hereinafter, the carbon resource storage unit 41 will be described in detail with reference to FIG. 4 and FIG. 5.

Meanwhile, the residual exhaust gas from which carbon dioxide is removed after carbon dioxide is captured in the carbon dioxide capture part 11 is discharged through the discharge part 50. For example, the residual exhaust gas discharged through the discharge part 50 may include the exhaust gas from which carbon dioxide is removed and may include some small amounts of uncaptured carbon dioxide.

At this time, since the concentration of carbon dioxide cannot exceed the regulatory standard value when the residual exhaust gas is discharged, the residual exhaust gas that does not exceed a standard (the standard set by a manager after the concentration of carbon dioxide in the atmosphere is measured) may be discharged on the basis of the concentration of carbon dioxide in the atmosphere to which the residual exhaust gas is discharged.

The reactor 10 may further include: a monitoring part 60 configured to monitor a level and a pH of the basic alkaline mixture solution in the absorption tower; and a control part 61 configured to adjust a supply amount of the basic alkaline mixture solution by the monitoring part 60.

Values of a gas meter, a pH meter, and a flow meter measured in all processes of the reactor 10 are managed in the monitoring part 60, and the control part 61 performs adjustment on the basis of the values represented by the monitoring part 60. The valves 14, 33, 34, and 35 may be adjusted in percentage with respect to values input from the control part 61.

In the system for capturing carbon dioxide and recycling carbon for use in the cement manufacturing facilities according to the present disclosure, carbon dioxide may be reduced by capturing carbon dioxide in the exhaust gas generated during the cement manufacturing process, and the captured carbon dioxide may be recycled into other useful materials by converting the captured carbon dioxide into sodium carbonate or sodium bicarbonate.

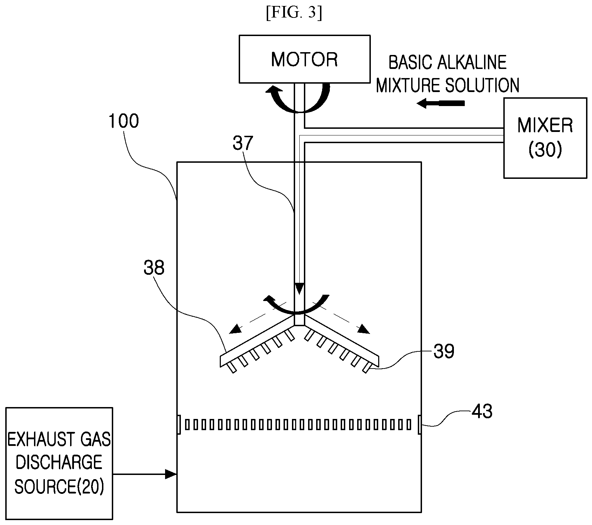

FIG. 3 is a view schematically illustrating a configuration of the absorption tower 100 for improving a carbon dioxide capture performance of the reactor 10 according to an embodiment of the present disclosure.

Referring to FIG. 3, in the configuration of the absorption tower 100 according to an embodiment of the present disclosure, the absorption tower 100 includes a reactor body formed in a cylindrical shape, a motor M, a rotary shaft 37 configured to be rotated by the motor M, and a rotation wing 38 that is operatively connected to the rotary shaft 37. Furthermore, the rotary shaft 37 and the rotation wing 38 are positioned inside the reactor body, the rotation wing 38 is formed such that a plurality of nozzles 39 through which the basic alkaline mixture solution is capable of being sprayed in the form of bubbles is formed in a longitudinal direction by being spaced apart from each other at a predetermined distance, the basic alkaline mixture solution supplied from the mixer 30 is introduced into the rotary shaft 37, and the basic alkaline mixture solution introduced accordingly is sprayed inside the reactor body having the cylindrical shape through the plurality of nozzles 39.

Specifically, according to an embodiment of the present disclosure, the rotation wing 38 is operatively connected to the rotary shaft 37. That is, as the rotary shaft 37 of the motor M is rotated, the rotation wing 38 for stirring is rotated simultaneously, so that the basic alkaline mixture solution inside the absorption tower 100 is capable of being stirred.

In addition, the plurality of nozzles 39 formed on the rotating wing 38 is configured to generate fine bubbles (bubbles having a diameter of several hundred micrometers to several micrometers). Therefore, as the rotary shaft 37 is rotated, the rotation wing 38 for stirring is rotated simultaneously, so that the basic alkaline mixture solution is capable of being more finely sprayed inside the absorption tower 100.

In addition, an inlet pipe may be mounted on the exhaust line 8 illustrated in FIG. 1 so that the exhaust gas introduced from the calciner 7 and the kiln 1 of the cement manufacturing facility is discharged to the lower portion of the absorption tower 100. In addition, a baffle 43 having a plurality of slits or holes formed such that the exhaust gas is introduced into the absorption tower 100 with a uniform speed distribution may be mounted.

According to the configuration of the absorption tower 100 described above, the basic alkaline mixture solution rotating and falling from the upper portion of the absorption tower 100 to the lower portion of the absorption tower 100 through the plurality of nozzles 39 formed on the rotation wing 38 by being spaced apart from each other at the predetermined distance is formed as fine droplets, the rotation wing 38 being operatively connected to the rotary shaft 37. Furthermore, as the basic alkaline mixture solution formed as the fine droplets and the exhaust gas formed as fine particles by passing through the baffle 43 having the plurality of slits or holes are in contact with each other, the carbon dioxide capture performance of the reactor 10 may be increased.

FIG. 4 is a view illustrating the carbon dioxide storage unit according to an embodiment of the present disclosure, and FIG. 5 is a view illustrating an underground temperature distribution according to a depth from a general ground surface.

Referring to FIG. 4 and FIG. 5, the carbon resource storage unit 41 is a carbon dioxide reactant storage unit in which an underground environment is considered, is capable of stably and efficiently storing a carbon resource that is a carbon dioxide capture reactant in a space larger than a conventional carbon dioxide storage apparatus and, at the same time, is capable of reducing the manufacturing cost, and may be implemented such that the stored carbon resource is capable of being utilized later when the stored carbon resource is required.

The carbon resource storage unit 41 may include an underground reservoir D, an inlet unit, a discharge unit connected to the underground reservoir and configured to unload the carbon dioxide reactant in the underground reservoir, a control unit, and a filter 50 filtering out impurities other than the carbon dioxide reactant during loading/unloading of the carbon dioxide reactant.

Here, the underground reservoir D is a place in which the carbon dioxide reaction product separated by the reactor 10 is accommodated and which is capable of being excavated in a natural terrain. For example, as illustrated in FIG. 5, the underground reservoir D may be formed at a depth of the ground in which a stable temperature of 12 degrees Celsius to 16 degrees Celsius is formed without shielding. For example, the underground reservoir D may be formed at a depth deeper than a depth of Am from the ground surface but may be formed at a depth lower than Bm from the ground surface. This is to prevent the carbon dioxide reaction product from changing the state in a place where the temperature exceeds 50 degrees Celsius, and to store the carbon dioxide reaction product in the form of bicarbonate in a liquid state or a gel state over a wide area for a long time.

The inlet unit serves to load the carbon dioxide reactant to the underground reservoir, and may include: an inlet valve 44 configured to open and close a flow path for the carbon dioxide reactant loaded inside the underground reservoir and to adjust the flow rate of the loaded carbon dioxide reactant; and an inlet line 45 connected to the underground reservoir such that the carbon dioxide reactant is capable of being loaded into the underground reservoir. Through the configuration of such an inlet unit, the carbon dioxide reactant separated from the reactor 10 may be stored in the underground reservoir.

The discharge unit serves to unload the carbon dioxide reactant in the underground reservoir, and may include: a discharge line 49 connected to the underground reservoir and configured to unload the carbon dioxide reactant to the outside of the underground reservoir; a discharge pump 48 provided on the discharge line 49 and configured to forcibly unload the carbon dioxide reactant accommodated in the underground reservoir to the outside; a discharge valve 47 configured to open and close a flow path toward the discharge pump 48 for the carbon dioxide reactant accommodated in the underground reservoir; and a vacuum pump 46 connected to the discharge line 49 between the underground reservoir and the discharge valve 47 and configured to form a vacuum state by discharging air in the underground reservoir to the outside. Through the configuration of such a discharge unit, the carbon dioxide reactant may be stably stored in the underground reservoir, and the pre-stored carbon dioxide reactant may be acquired and used later when the carbon dioxide reactant is required.

When the carbon dioxide reactant accommodated in the underground reservoir is loaded into the underground reservoir or when the carbon dioxide reactant is unloaded from the underground reservoir to the outside, the control unit 51 controls the inlet unit and the discharge unit so that the carbon dioxide reactant having an appropriate flow rate is capable of being stored in the underground reservoir or the carbon dioxide reactant pre-stored in the underground reservoir is capable of being discharged to the outside.

The filter 50 may be disposed in a path of the inlet line 45 or a path of the discharge line 49, and may have pores having a diameter of 10 µm to 20 µm formed in a size that allows penetration of the carbon dioxide reaction product, so that the filter 50 is capable of filtering out impurities other than the carbon dioxide reactant during loading/unloading of the carbon dioxide reactant.

Accordingly, the filter 50 performs a function of filtering out impurities other than the carbon dioxide reactant when the carbon dioxide reactant introduced from the reactor 10 is loaded to the underground reservoir or the carbon dioxide reactant is unloaded from the underground reservoir to the outside. Therefore, impurities other than the carbon dioxide reactant are not mixed and may not be stored in the underground reservoir, or only the carbon dioxide reactant without impurities may be acquired when the carbon dioxide reactant pre-stored in the underground reservoir is unloaded to the outside.

As described above, the carbon dioxide reactant generated in the system for capturing carbon dioxide and recycling carbon for use in the cement manufacturing facilities according to the present disclosure is capable of being stably and efficiently stored in a larger space and, at the same time, the manufacturing cost and the operation cost compared to that of a conventional carbon dioxide storing apparatus may be reduced and also the stored carbon resource may be used later when the carbon resource is required.

Although embodiments of the present disclosure have been described for illustrative purposes, those skilled in the art will appreciate that various modifications, additions and substitutions are possible, without changing the spirit or essential features of the present disclosure. Therefore, it should be understood that the embodiments described above are illustrative in all aspects and not restrictive. The scope of the present specification is characterized by the appended claims rather than the detailed description described above, and it should be construed that all alterations or modifications derived from the meaning and scope of the appended claims and the equivalents thereof fall within the scope of the present specification.

Meanwhile, the exemplary embodiments of the present specification are disclosed in the present specification and the drawings, and specific terms are used, but the specific terms are used as general meanings merely for easily explaining the technical contents of the present specification and helping understand the present disclosure, but not intended to limit the scope of the present specification. It is obvious to those skilled in the art to which the present specification pertains that other modified embodiments may be carried out on the basis of the technical spirit of the present specification in addition to the exemplary embodiments disclosed herein.

### Industrial Applicability

In the present disclosure, the carbon dioxide reactant generated in the system for capturing carbon dioxide and recycling carbon for use in the cement manufacturing facilities capable of efficiently reducing carbon dioxide discharged from the cement manufacturing facilities and also capable of recycling carbon dioxide into other useful materials may be provided.

In addition, since the system for capturing carbon dioxide and recycling carbon, which is the present disclosure, is easily applicable to a conventional cement manufacturing facility system, the system for reducing carbon dioxide which is a representative harmful substance that affects global warming among the exhaust gas generated in the cement manufacturing facility may be provided.

Specifically, in the system for capturing carbon dioxide and recycling carbon for use in the cement manufacturing facilities according to the present disclosure, a problem of low process operation efficiency and reduction in economic feasibility of a conventional carbon dioxide capture system is solved, and a profit generating effect by manufacturing high purity sodium bicarbonate utilized in various industrial fields such as food additives, detergents, soap raw materials, high-tech medical industries, wastewater treatment, and so on by utilizing carbon dioxide captured through the carbon dioxide capture facility may also be expected.

In addition, the carbon dioxide reactant generated in the system for capturing carbon dioxide and recycling carbon for use in the cement manufacturing facilities according to the present disclosure is capable of being stably and efficiently stored in a larger space and, at the same time, the manufacturing cost and the operation cost compared to that of a conventional carbon dioxide storing apparatus may be reduced and also the stored carbon resource may be used later when the carbon resource is required.

The present disclosure has a sufficient possibility for marketing or sales of the system for capturing carbon dioxide and recycling carbon for cement manufacturing companies recognized as the main sources of greenhouse gas emissions, and is also feasible to the extent that the present disclosure is capable of being clearly realized in reality, so that the present disclosure has industrial applicability.

## Claims

1. A system for capturing carbon dioxide and recycling carbon for use in cement manufacturing facilities, the system comprising:
a preheater provided with multiple stages of cyclones arranged in series in a vertical direction and configured to receive and preheat a cement raw material;
a calciner configured to calcine the cement raw material preheated by the preheater;
a kiln configured to burn the cement raw material calcined in the calciner;
an exhaust line connected to the cyclones of the preheater and configured to discharge an exhaust gas respectively discharged from the calciner and the kiln to an outside; and
a reactor disposed on the exhaust line, configured to receive the exhaust gas and to capture carbon dioxide in the exhaust gas by reacting the exhaust gas with a basic alkaline mixture solution, to collect a reactant containing the captured carbon dioxide, and to separate a carbon dioxide reactant and a waste solution from the reactant.

2. The system of claim 1, wherein the reactor comprises:
a mixer configured to supply the basic alkaline mixture solution;
an absorption tower configured to capture carbon dioxide in the exhaust gas by reacting the basic alkaline mixture solution supplied from the mixer with the exhaust gas in which micro bubbles are formed by passing through a bubbler formed on a lower portion of the absorption tower;
a separator configured to collect the reactant containing carbon dioxide captured in the absorption tower and to separate the carbon dioxide reactant and the waste solution from the reactant; and
a carbon resource storage unit storing the separated carbon dioxide reactant for recycling the carbon dioxide reactant.

3. The system of claim 2, wherein the mixer is configured to generate the basic alkaline mixture solution by mixing a basic alkaline solution supplied from a basic alkaline solution storage with water supplied from a water supply source.

4. The system of claim 3, wherein the basic alkaline solution and the water are mixed in a ratio of 1:1 to 1:5.

5. The system of claim 2, wherein an average pH of the basic alkaline mixture solution is pH 12 to pH 13.5.

6. The system of claim 1, wherein the basic alkaline mixture solution comprises:
at least one oxide selected from a group consisting of SiO₂, Al₂O₃, Fe₂O₃, TiO₂, MgO, MnO, CaO, Na₂O, K₂O, and P₂O₃;
at least one metal selected from a group consisting of Li, Cr, Co, Ni, Cu, Zn, Ga, Sr, Cd, and Pb; and
at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

7. The system of claim 2, wherein the basic alkaline mixture solution is input by being adjusted through a valve in the mixer when a level of the basic alkaline mixture solution in the absorption tower is lowered to less than 90%, and inputting of the basic alkaline mixture solution is stopped and, at the same time, the basic alkaline solution and water are mixed until a pH of the basic alkaline mixture solution becomes pH 12 to pH 13.5 when the level of the basic alkaline mixture solution becomes 100%.

8. The system of claim 2, wherein the bubbler is configured to form exhaust gas micro bubbles by using the exhaust gas.

9. The system of claim 2, wherein the absorption tower comprises a body formed in a cylindrical shape, a motor, a rotary shaft rotated by the motor, and a rotation wing operatively connected to the rotary shaft,
the rotary shaft and the rotation wing are positioned inside the body,
a plurality of nozzles capable of spraying the basic alkaline mixture solution in a form of bubbles is formed on the rotation wing in a longitudinal direction by being spaced apart from each other at a predetermined distance, and
the basic alkaline mixture solution supplied from the mixer is introduced into the rotary shaft, and the basic alkaline mixture solution that is introduced is sprayed inside the body having the cylindrical shape through the plurality of nozzles.

10. The system of claim 9, wherein the absorption tower further comprises a baffle having a plurality of slits or holes such that the exhaust gas is introduced with a uniform speed distribution.

11. The system of claim 1, wherein the cyclones are formed such that the cyclone which is positioned at an uppermost stage and to which the cement raw material is supplied and the cyclone which is positioned at a lowermost stage and to which the exhaust gas respectively discharged from the calciner and the kiln are arranged at two stages in series in the vertical direction.

12. The system of claim 1, wherein the carbon dioxide reactant comprises sodium carbonate (Na₂CO₃) or sodium bicarbonate (NaHCO₃).

13. The system of claim 2, wherein the separator comprises:
a centrifuge configured to separate the waste solution and the carbon dioxide reactant containing sodium carbonate (Na₂CO₃) or sodium bicarbonate (NaHCO₃) from the reactant; and
a vibration separation membrane formed corresponding to an inner circumference of a discharge pipe for discharging only sodium bicarbonate in the carbon dioxide reactant, the vibration separation membrane having a surface provided with fine holes formed in a size capable of allowing carbon bicarbonate to pass therethrough.

14. The system of claim 2, wherein the reactor further comprises:
a monitoring part configured to monitor a level and a pH of the basic alkaline mixture solution in the absorption tower; and
a control part configured to adjust a supply amount of the basic alkaline mixture solution by the monitoring part.

15. The system of claim 2, wherein the carbon resource storage unit comprises:
an underground reservoir accommodating the carbon dioxide reactant;
an inlet unit configured to load the carbon dioxide reactant to the underground reservoir;
a discharge unit connected to the underground reservoir and configured to unload the carbon dioxide reactant in the underground reservoir;
a control unit configured to control the inlet unit and the discharge unit during loading/unloading of the carbon dioxide reactant accommodated in the underground reservoir; and
a filter configured to filter out impurities other than the carbon dioxide reactant during the loading/unloading of the carbon dioxide reactant.

16. The system of claim 15, wherein the carbon dioxide reactant comprises bicarbonate in a liquid state or a gel state.

17. The system of claim 15, wherein the inlet unit comprises:
an inlet valve configured to open and close a flow path for the carbon dioxide reactant that is loaded inside the underground reservoir, thereby adjusting a flow rate of the carbon dioxide reactant that is loaded; and
an inlet line connected to the underground reservoir so as to load the carbon dioxide reactant.

18. The system of claim 15, wherein the discharge unit comprises:
a discharge line connected to the underground reservoir and configured to unload the carbon dioxide reactant to an outside of the underground reservoir;
a discharge pump provided on the discharge line and configured to forcibly unload the carbon dioxide reactant accommodated in the underground reservoir to the outside;
a discharge valve configured to open and close a flow path toward the discharge pump for the carbon dioxide reactant accommodated in the underground reservoir; and
a vacuum pump connected to the discharge line between the underground reservoir and the discharge valve and configured to discharge air in the underground reservoir to the outside and to form a vacuum state.

19. The system of claim 15, wherein the filter comprises pores having a diameter of 10 µm to 20 µm formed in a size that allows penetration of the carbon dioxide reactant, and filters out impurities other than the carbon dioxide reactant during the loading/unloading of the carbon dioxide reactant.

20. The system of claim 15, claim 17, or claim 18, wherein the filter is disposed in a path of the inlet line or in a path of the discharge line.
